# EUROPEAN PATENT SPECIFICATION

(11) **EP 4 405 523 B1**
(45) Date of publication and mention of the grant of the patent: **30.07.2025**
(21) Application number: 22789548.9
(22) Date of filing: 19.09.2022
(51) Int. Cl.: D06F 33/48, D06F 37/22, D06F 103/26, D06F 105/00, D06F 105/48

(54) **LAUNDRY TREATING APPLIANCE AND ITS METHOD**
WÄSCHEBEHANDLUNGSGERÄT UND VERFAHREN DAZU
APPAREIL DE TRAITEMENT DU LINGE ET SON PROCÉDÉ

(30) Priority: 20.09.2021 IT 202100024053
(43) Date of publication of application: 31.07.2024
(73) Proprietor: ELECTROLUX APPLIANCES AKTIEBOLAG, 105 45 Stockholm (SE)
(72) Inventor: CHIRIATTI, Antonio Francesco, 73614 Schorndorf (DE)
(74) Representative: Electrolux Group Patents
(86) International application number: PCT/EP2022/075986
(87) International publication number: WO 2023/041789

(56) References cited:
- EP-A2- 2 441 872
- WO-A1-2018/184734
- WO-A1-2020/253988

## Description

The invention relates to a balancing system for a washer or dryer appliance and its method to compensate for the unbalance created by a not uniform distribution of the laundry in the drum.

In general a washing machine includes a drum to be loaded with clothes and a motor to rotate the drum and perform a series of phases in a washing cycle such as washing, rinsing and spinning phases.

When the laundry is not uniformly distributed in the drum and a certain mass is concentrated in a part of the drum, during the rotation of the drum in the spinning phase, vibrations and noise occur due to eccentric rotation of the drum. If such eccentric rotation becomes severe, some parts of the washing machine, such as the drum, the bearings supporting the drum, or the tub may be damaged.

Normally to prevent the above listed damages an unbalance measurement check is implemented, that before spinning measures the unbalance level. In case of excessive unbalance the appliance control tries to better redistribute the laundry in the drum and, if after several attempts, the unbalance level is still to high, it performs the spinning at reduced rpm.

The unbalance has several negative effects on the customer satisfaction because of the generated noise and vibrations, the longer washing/drying cycle duration due to the re-balancing attempts and the poor drying performance when, in case of excessive unbalance level the spinning rpm speed is reduced.

Moreover the generated mechanical vibrations cause a significant stress to the mechanical structure reducing the appliance reliability that is partially compensated in the washer design by the use of bigger, more robust and expensive parts.

Therefore in the washing machine design it is beneficial the use of a balancer, which offsets unbalanced load generated from inside of the drum, to stabilize the drum rotation.

The known balancer systems make use of a balancer ring with a hollow space where are positioned some masses, typically spherical shaped that are free to move in the balancer ring. Often the balancer ring is filled with a fluid to limit the speed of the movement of the balancing masses. Even if this known balancer systems help to reduce the unbalance level they suffer of several drawbacks:
- In washing at low rpm the masses are moving during the tumbling creating unbalance, noise and a resistant force to the washer motor.
- In spinning the balancing process is very slow and complex, it may takes several minutes until the masses move to counterbalance the unbalance present in the drum.

In order to improve the balancing process active balancers are revealed. In particular WO2020/253988 reveals a balancer ring with balancing units receiving wireless power from a transmission coil provided at the tub. The transmitter coil is wound centered with respect the drum axis while the receiver coils in the balancing unit have their winding axis parallel to the radial direction defined by the drum axis.

The orthogonal configuration between the transmitter coil winding axis and the receiver coil winding axes ensures a constant power transfer to the balancing units when they rotate with the drum facing the transmitter coil winding.

In addition WO2020/253988 reveals a detection coil positioned on the transmitter coil winding that allows, during the drum rotation, the detection of the balancing units passage at its position. The appliance controller, to balance the drum load, exploits the action of gravitational and inertial forces acting on the balancing units. It enables their movement with a proper timing, based on their positions and the unbalance amplitude and position.

Previous art disclosures use electromagnetic actuators having moving parts that can brake a balancing unit wheel or can act interacting directly with the housing walls.

The actuators based on moving parts are more complicated to build, are expensive to integrate into the complete system and have a response time that depends on the moving part mass.

A first invention objective is to provide an active balancing system that uses an improved actuator solution without moving parts that is cheaper, has faster reaction time, a high reliability while ensuring a low friction force for the balancing unit. It permits a large rpm range where the balancing unit can be moved under the action of the gravitational and inertial that includes the wash unit resonance frequency.

It allows the possibility to cross the resonance frequency with a balanced drum and to perform balancing adjustment above the resonance frequency compensating the laundry unbalance changes due to the water extraction when the drum spinning speed is increased.

To solve the problem the invention disclose an electromagnet in the balancing unit that interacts with a ferromagnetic race of the housing channel.

A simple application of an electromagnet in the balancing unit due to its sliding friction coefficient would give a limited the rpm range where it is possible to move it.

According to the invention there is a wheel that transfers to the outer race the largest part of the acceleration force acting on the balancing unit; while the electromagnet transfers the remaining much smaller part of the acceleration force. It is obtained by having the balancing unit centre of gravity on one side very close the wheel shaft while on the opposite side, at the end, there is the electromagnet.

The small force transferred by the electromagnet surface is enough to ensure it a mechanical contact with the ferromagnetic outer race of the housing.

This configuration ensures a low friction between the balancing unit and the housing as the large part of the force is transferred through the wheel, which has a low rolling friction coefficient. The smaller remaining part of the force is transferred through the electromagnet surface which has a higher sliding friction coefficient, but its contribution is limited by the low percentage of the transferred force.

Being the housing outer race made of ferromagnetic material the controllable magnetic force acting between the electromagnet surface and the housing outer race generates an additional friction force that acts on the balancing unit.

This frictional force is proportional to the magnetic force multiplied by the electromagnet surface sliding friction coefficient with the housing outer race. In this way it is possible to change the balance unit friction permitting or blocking its movement in the housing.

In a first embodiment the electromagnet has a coil that wound around ferromagnetic material and the current flowing in the coil generates the magnetic field. In this embodiment when both balancing units must stay in braked condition a multiplexing of two the two balancing unit resonance frequencies is used to supply a controlled average current to both balancing units electromagnets.

In a second embodiment a magnet generates the magnetic field in the electromagnet and in this case a coil generates an opposite magnetic field that can cancel the resulting magnetic field. It simplifies the wireless powering transfer to the balancing units. In this case both balancing units are normally braked by the magnetic material and only the one that must be moved needs to be powered by transferring power at its resonating frequency.

Other advantages and features of a balancing system for a laundry treating appliance, according to the present invention will be clear from the following detailed description, provided only as a non limitative example, in which:
Fig. 1 is sectional view of a first possible embodiment of a horizontal axis washer with a balancing system object of this invention.
Fig. 2 is a front view showing the balancing units in the housing.
Fig. 3 is a detailed view of Fig. 2.
Fig. 4 and Fig. 5 shown respectively a sectional view and a front view of an electromagnet.
Fig. 6 shows a sectional view of a parking actuator.
Fig. 7 shows a front view of a transmitter coil and detection coils.
Fig. 8 shows a block diagram of the electric functions interfacing the transmitter coil and detection coils.
Fig. 9 shows a block diagram of the balancing unit electrical functions.
Fig. 10 shows the balancing units blocked in the parking positions and the position of a possible unbalance generated by the laundry in the drum.
Fig. 11 shows timing diagrams of the possible steps to change one balancing unit position.
Fig. 12 shows the balancing units positions balancing the laundry in the drum.

In the figures same parts are indicated with the same reference number.

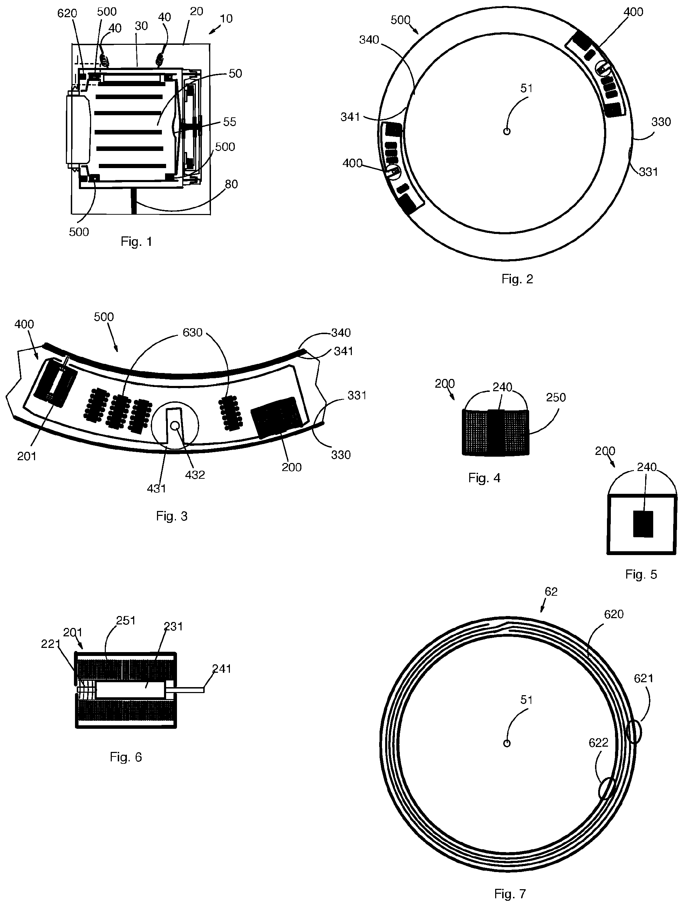

In Fig. 1 it is shown a sectional view of the key structural parts of a horizontal axis washer 10. In particular it is shown the wash unit consisting of the tub 30 on which is rotatably mounted a drum 50. The wash unit is suspended to the cabinet 20 through springs 40 and dumpers 80.

At the external perimeter of the drum 50 is fixed, centred with respect its axis 51, a housing ring shaped 500 facing a transmitter coil 620.

Fig. 2 shows a front view of the housing 500 channel internal content, where the internal sides in axial direction, parallel to the drum 50 axis 51, form an outer race 331 and an inner race 341 for two balancing units 400. In this document, if not differently specified, radial and axial directions are always defined with respect to the drum axis 51.

Fig. 3 shows a detailed view of one balancing unit 400 in the housing 500. The balancing unit has an arc shaped 410 body forming its exterior appearance and a driving wheel 431 configured to roll on the outer race 331. The driving wheel 431 axis 432 is parallel to the drum axis.

The balancing unit body 410 dimensions radial and axial are smaller that the housing channel dimensions so that it can move in the housing channel. On Its side opposite to the driving wheel 431 there is a parking actuator 201 that interacting with an opening 352 on the inner race 341, keeps the balancing unit blocked at its parking position when the drum is rotating at low rpm.

At one of the balancing unit 410 body ends there is an electromagnet 200 facing the outer race 331. The electromagnet 200 sectional view is shown in detail in Fig. 4. It includes the electric winding 250 wound around the central part of a ferromagnetic core 240. The magnetic field, generated when the winding 250 is powered, is closed through the core 240 surfaces shown on the electromagnet 200 front view of Fig. 5 and the ferromagnetic outer race 331.

The electromagnet 200 mechanical design and its position fixation on the balancing unit 410 body ensure a continuous contact between the surfaces of the electromagnet 200 core extensions 240 and the inner race 331.

When the electromagnet winding is powered both its ferromagnetic core 240 and the inner race 331 contacted surface are magnetized. It generates an attraction force between the two surfaces that increases the friction force between the balancing unit 400 and the outer race 331.

By changing the current flowing in the electromagnet winding 250 it is possible to brake in a controlled way the balancing unit movement.

Fig. 6 shows a sectional view of the parking actuator 201 it includes a movable ferromagnetic part 231 with an extension pin 241 and a winding 251. A spring 221 pushes the movable part 231 keeping the pin 241 inside the opening 352 formed in the housing inner race 341. It blocks the balancing unit 400 at its parking position when the drum 30 is rotating at low rpm.

When the parking actuator winding 251 is powered or when the drum 50 rotates at higher rpm, respectively the generated magnetic force and/or the centrifugal force retracts the pin 241 from the opening 352, enabling the balancing unit 400 movement in the housing 500 channel.

The balancing unit 400 has its masses distributed so that the position of its centre of gravity is between the driving wheel 431 axis 432 and the electromagnet 200, but much closer to the driving wheel axis 432.

In this way the radial force acting on the balancing unit 400 is transferred to the outer race 331 mostly through the driving wheel 431, while the remaining force fraction is transferred by the electromagnet 200 contacting surface 240. The resulting friction coefficient between the balancing unit 400 and the outer race 331 can be calculated as the sum of the wheel 431 rolling friction and the electromagnet sliding friction.

Because the largest part of the centrifugal force is transferred through the wheel 431, it can be configured to minimise its rolling friction coefficient keeping the balancing unit friction at high drum speed as low as possible.

For example the driving wheel 431 could be made of hardened steel and the outer race 331 could be formed by a steel sheet providing a possible coefficient of rolling friction c=0,1mm. While the electromagnet sliding friction Ks, assuming steel material for its core 240, could have a range of values Ks=0,2-0,5.

Moreover the position the balancing unit 400 could be designed to have its resulting centre of gravity at a position that ensures that the centrifugal force transferred by the electromagnet 200 to the outer race 331 is much smaller, for example 1/20 smaller, than the force transferred by the driving wheel 431.

The resulting balancing unit friction coefficient could be, calculated the weighting the force sharing Fc= 0,95*Kr +0,05Ks given by the contributions of the wheel 431 rolling friction Kr and the maximum actuator static friction Ks.

On the basis of the above assumptions, if the driving wheel 431 has 10 mm radius, we could have Kr=0,1mm/10mm=0,01 and the resulting balancing unit friction coefficient would be Kc=0,95*0,01+0,05*0,5=0,0095+0,025=0,0345.

The friction force F acting between the balancing unit 400 and outer race 331 could be F=Kc*Fc+Ks*Fm, where Fc is the radial force acting on the balancing unit and Fm is the magnetic force acting between the outer race 331 and the electromagnet 200 when its coil 250 is powered.

At low rpm in order to block the balancing unit movement the the magnetic force must be grater than the gravitational force. It means that enough current must be supplied to the electromagnet 200 to ensure that the balancing stays attached to the outer race 331 and it does not slide on its surface. Assuming a worst case Ks=0,2 it would require 0,2*Fm>M*g where M is the balancing unit mass and g is the gravity acceleration constant, i.e. Fm>5*m*g, a magnetic force 5 times higher than the gravitational force. In this condition the balancing unit is blocked at its position.

During the drum 50 rotation period by stopping, with a proper timing, the supplied current to the electromagnet 200, the gravitational force can move the balancing unit in the desired direction.

The balancing unit 400 is equipped inside the body 410 with receiver coils 630. The balancing unit receiver coils 630 are wound around a cylindrical ferrite core extending in radial direction, perpendicular to the drum axis 51.

A front view of the transmitter coil 620 is shown in Fig. 7, it is fixed to the tub 30 with a support element 62 and has its winding 620 wound around the drum 50 axis 51.

The position configuration between the transmitter coil 620 and the balancing unit receiver coils 630 ensures a constant magnetic coupling when the drum 50 is rotating or the balancing units 400 move in the housing 500 facing the transmitter coil 620 winding. The constant magnetic coupling ensures a continuous wireless electric power transfer from the transmitter coil 620 fixed on the tub 30 to the balancing units 400 in the housing 500.

On the transmitter coil winding 620, as shown in Fig. 7, there are two detection coils 620 and 621. The two detection coils 620 and 621 are identical, having an elliptical shape with the minor axis aligned to the radial direction. They are positioned with respect to the radial direction to ensure a zero flux coupled to the transmitter coil 620. It is achieved positioning them approximately opposite with respect the transmitter coil 620 winding average radial dimension.

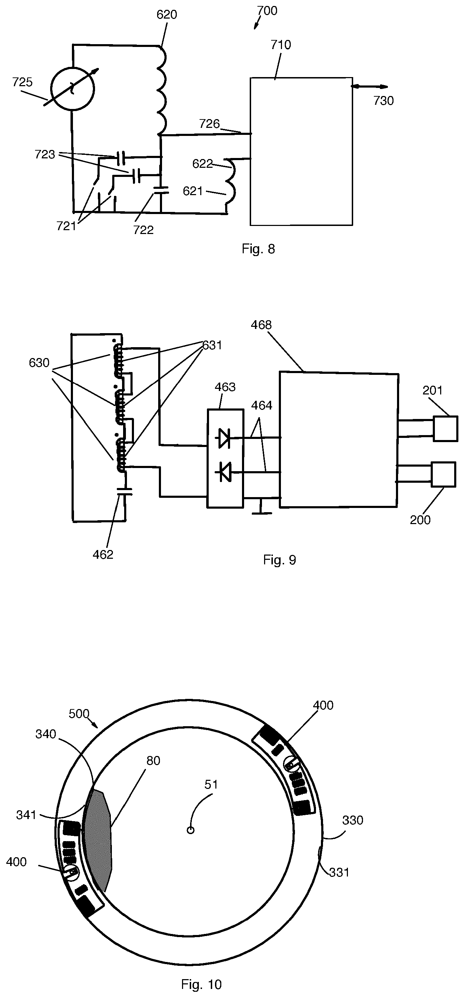

As shown in the block diagram of Fig. 8, a voltage generator 725 with a series capacitor 722 powers the transmitter coil 620. It generates an electromagnetic field, which is coupled with the receiver coils 630 and the detection coils 621 and 622. As said before the detection coils positions with respect the transmitter coil 620 ensures that at their series connection there is no voltage induced by the transmitter coil 620. The voltage generator 725 output voltage amplitude and frequency are set by a local controller 710 that operates under the supervision of the appliance manager 730 (not shown).

The local controller 710 can also change the transmitter coil 620 resonance frequency by selecting compensating capacitors 723 with switches 721.

In the balancing unit 400, as shown in the block diagram of Fig. 9, the receiver coils 630 primary winding are connected in series and form a resonant circuit with the capacitor 462. Their secondary windings 631 are connected in series and perform an impedance adaptation function. Their series output voltage goes to a voltage rectifier block 463, its dc output voltage 464, filtered by conditioning block 468, powers the electromagnet 200 and the parking actuator 201.

The balancing units have receiver coils resonating at different frequencies. The local controller 710 by changing the generator 725 operating frequency can select the balancing unit resonance frequency to power its electromagnet 200 and the parking actuator 201.

The local controller 710 can set the power transferred to the two balancing units by multiplexing the duration times tm1 and tm2 when the generator 725 output frequency operates at the two balancing units resonance frequencies. The multiplexing time frequency 1/tm is much lower than the average resonance frequencies F1 and F2 of the balancing units receiver coils, 1/tm<<(F1+F2)/2. For example F1=200KHz, F2=220KHz and 1/tm=1KHz. In each tm time slot the appliance controller can set within the time range tm>t>0 the times tm1 and tm2 lengths when the generator 725 is active for the selected frequencies F1 and F2.

The resonant current induced in the receiver coils 630 by the electromagnetic coupling with the transmitter coil 620 generates a voltage at the detection coils 621 622 series output when the balancing unit 400 is in their proximity. It allows the detection of the balancing units passage.

The appliance manager (not shown) through the local controller 710 can change the balancing units 400 positions based on unbalance sensors (not shown) information to effectively balance the drum 50.

The appliance manager can leverage the action of the gravitational and inertial forces acting on the balancing units to change their positions. It can enable the selected balancing unit movement with a proper timing by stopping the power transferred to its electromagnet 400 that normally brakes it.

At low drum rpm, for example in washing, the balancing units parking actuators 201 movable parts have their extension pin 241 in the inner race openings 352.

The appliance manager (not shown) to perform the spinning cycle first increases the drum speed until the laundry is satellized, said s1 this drum rpm speed. The parking actuators 201 springs 221 are configured to ensure that at this speed s1 their force is higher than the centrifugal force acting on the movable ferromagnetic part 231.

The two balancing units 400 and 400 are kept opposite each other in the parking actuators defined positions as shown in Fig. 10. In this condition the appliance manager (not shown) can estimate with its sensing elements (not shown) the laundry unbalance 80 amplitude and position.

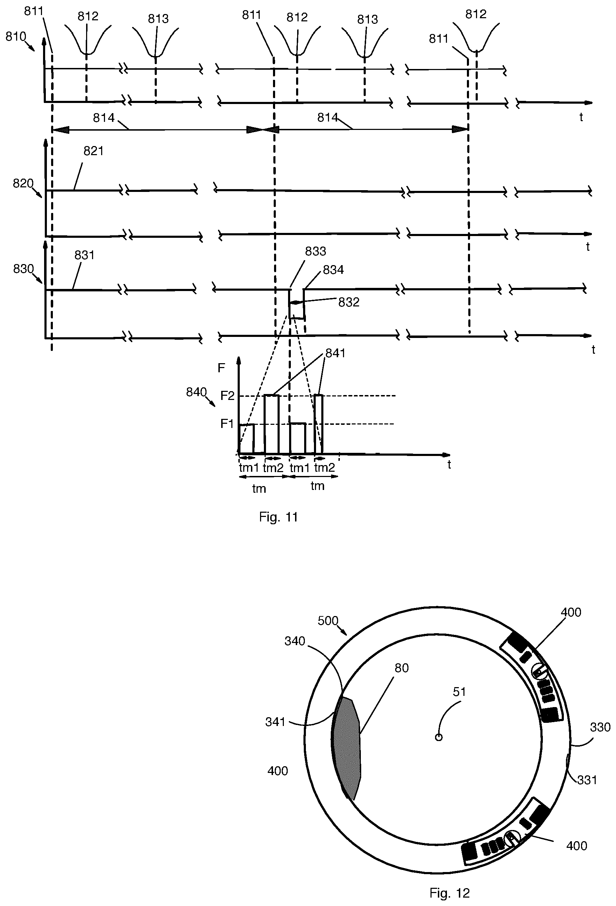

In Fig. 11 are shown in time diagrams the steps executed by the appliance manager to change one balancing unit position.

The balancing process changing the balancing units positions is performed keeping the drum 50 first rotation speed s1 constant.

The first time diagram 810 shows the detection pulses 812 and 813 associated to the balancing units passage at the detection coils 620 621 position. The appliance manager receives a reference periodical pulse 811 generated each drum turn rotation time period 814 when a reference point on the drum is aligned with a reference position on the tub.

The appliance manager based on this timing information can calculate the balancing units positions with respect to the drum reference position and knows the unbalance position from his interna sensing function.

The appliance manager knowing the relative positions of the balancing units with respect to the unbalance 80 can calculate the new balancing units positions that can balance the drum 50.

At the satellization speed s1 the gravitational force acts to move the balancing units each drum rotation turn back and forward with respect the drum rotation direction.

The appliance manager by enabling the balancing unit movements, with the proper timing within the drum turn, can change in steps their positions leveraging the action of the gravitational force.

The time diagrams 820 and 830 respectively shown the average power levels 821 and 831 transferred to the two balancing units 400.

By transferring power to the two balancing units 400 the parking actuators 201 extension pins 241 are retracted from the inner race openings 352. At the same time the attraction forces Fm between the electromagnets 200 and the outer race 331 keep the balancing units blocked at their positions. The attraction force depends on the average power supplied to the electromagnets coils 250 that can be regulated by changing within the multiplexing period tm, the time duration tm1 and tm2 when the generator 725 output frequency is respectively F1 and F2.

The appliance manager reduces the average transferred power 831 to the selected balancing unit to be moved. The parking actuator 201 is configured so that, once its ferromagnetic part 231 has moved retracting its pin 241, a certain hysteresis behaviour and the reduced power are enough to keep the pin 241 in the retracted condition.

The power reduction pulse 832 starts at the time 833 until the time 834, the time interval where the enabled balancing unit moves under the action of the gravitational force in the desired direction. To reduce the average power to the moved balancing unit, which has in this case the receiver coils resonant frequency F2, the time slot 844 duration associated to the frequency F2 is reduced. While the average power transferred to the balancing unit with resonance frequency F1 is kept constant not having changed its time slot duration.

The time diagram 840 shows in a zoomed time scale, in detail, the transition at the instant of the start of the average power reduction 833. After the pulse reduction start 833 the F2 time slot duration 841 is reduced. The appliance manager after the pulse power reduction 832, in the next drum turn, can evaluate the new balancing unit position using the pulse 812 detecting its passage at the detection coils 620 621 positions. Repeating iteratively the described positioning steps, the appliance manager, as shown in Fig. 12, can position the balancing units 400 in the housing 500 canceling the unbalance 80 present in the drum created by the laundry.

A big advantage of using an electromagnet as brake is the possibility the adjust the resulting balancing unit movement changing the average power transferred that changes the braking force effect of the electromagnet current.

In a second embodiment the electromagnet 200 could have a permanent magnet (not shown) that magnetise its core 240. The electromagnet with permanent magnet has also a coil 250 wound around the core 240. The coil 20 magnetic field, when powered, generates an opposite magnetic canceling the permanent magnet field. In this embodiment when both electromagnets coils are not powered the magnetic force can keep the balancing units blocked at their positions.

It means that in washing the balancing units cannot move; if at the end of each spinning cycle the appliance manager position them opposite each other, the parking actuator (201) function is not needed. To move one balancing unit the appliance manager in this embodiment needs to power its electromagnet by transferring power at its receiver coils resonance frequency.

In both embodiments the appliance manager by changing the generator 725 time slot 841 duration for the selected resonance frequency can change the balancing unit braking force, result of the average power transfer change. It permits a fine tuning of the balancing unit movement step, where, while keeping the drum rotation speed constant, the movement in the half drum rotation period can be adjusted by the braking force reduction amplitude and duration.

## Claims

1. A laundry treating appliance (10) comprising a tub (30), a drum (50) rotatably mounted inside the tub (30), at least one transmitter coil (620) wound around the drum (50) axis (51) configured to supply wireless electrical power; at least one ring shaped housing (500) mounted centred to the drum (50) on its perimeter, having an annular channel defined therein; at least two balancing units (400), each balancing unit having a body (410) forming its exterior permitting its movement in the said channel, said balancing unit (400) has at least, one receiver coil (630) having its winding axis perpendicular to the said transmitter coil (620) winding axis configured to receive wireless power from the said transmitter coil (620) and actuator means (200, 201) powered by said receiver coil (630); unbalance sensors and an appliance manager controlling the complete laundry treating appliance (10) operation, configured to manage the positioning of said balancing units (400) and to drive the transmitter coil (620) based on the position of the balancing units (400), the drum (50) unbalance and the drum rotation speed, **characterized in that** the actuator means (200) is an electromagnet configured to create a friction force resulting of the magnetic attraction between its magnetising surface (240) and one ferromagnetic race (331) present on one of the housing (500) sides (331).

2. Laundry treating appliance (10) according to claim 1, **characterized in that** said balancing unit (400) further comprises a contact element (431) extending from its body (410), configured to slide or roll with low friction, on the housing (500) side (331), external with respect to the drum (50) axis.

3. Laundry treating appliance (10) according to claim 2, **characterized in that** the contact element is a wheel (431) having its rotation axis parallel to the drum (50) axis, configured to roll on the housing (500) side (331), external with respect to the drum axis.

4. Laundry treating appliance (10) according to claim 3, **characterized in that** the ferromagnetic race (331) is on the housing (500) side (331), external with respect to the drum (50) axis (51), and the balancing unit (400) centre of gravity radial position, referenced to the drum (50) axis (51), is comprised between the wheel (431) rotation axis (432) and the electromagnet (200) radial positions, wherein the wheel (431) axis (432) angular distance with respect to the balancing unit (400) center of gravity is less than 10% lower than the the wheel (431) axis (432) angular distance with respect to the electromagnet (200).

5. Laundry treating appliance (10) according to claims from 3 to 4, **characterized in that** the the wheel (431) axis (432) and the balancing unit (400) centre of gravity are aligned with respect the radial direction defined by the drum (50) axis.

6. Laundry treating appliance (10) according to claims from 1 to 6, **characterized in that** the balancing units receiver coils (630) are configured to have different resonance frequencies.

7. Laundry treating appliance (10) according to claims 1 to 6, **characterized in that** a parking actuator element (201) has a pin (241) configured to enter into a housing side (341) opening to block the balancing unit (400) movement in the housing (500) when the drum (50) rotates with low rpm.

8. Laundry treating appliance (10) according to claim 7, **characterized in that** the parking actuator element (201) is configured so that the centrifugal force acts to the retract its pin (241) out from the housing side (341) opening.

9. Laundry treating appliance (10) according to claims 7 and 8, **characterized in that** the parking actuator element (201) is an electromagnet configured to retract its pin (241) out from the housing side opening when its coil (251) is powered.

10. Method to control a laundry treating appliance (10) according to claims from 1 to 9 comprising a tub (30), a drum (50) rotatably mounted inside the Tub (30), at least one transmitter coil (620) configured to supply wireless electrical power; at least one ring shaped housing (500) mounted centred to the drum (50) on its perimeter, having an annular channel defined therein; at least two balancing units (400) movably disposed in the said channel, said balancing units (400) having each at least one receiver coil (630) configured to receive wireless power from the said transmitter coil (620), one wheel (431) configured to roll on one side (331) formed in said housing (500) channel and an electromagnet actuator means (200) configured to magnetically interact with one race in the housing (500) having ferromagnetic behaviour; unbalance sensors and an appliance manager configured to manage the complete appliance operation, the positioning of the two balancing units (400) and to drive the transmitter coil (620) based on the positions of the two balancing units (400), the drum (50) unbalance and the drum (50) rotation speed, the method comprising:
- set a first drum (50) rotation speed s1 higher than the laundry satellization speed, the balancing units (400) are braked in the housing (500) by the friction due to the magnetic attraction force between the electromagnets (200) and the race in the housing (500) having ferromagnetic behaviour.
- if the unbalance is higher than a predefined level, evaluate the balancing units (400) positions with respect to the drum (50) unbalance;
- calculate the desired balancing units position change and for the selected balancing unit to be moved, the time interval when, during a drum (50) rotation turn, the gravity force acts to move it in the desired direction;
- change the current flowing in the selected balancing unit electromagnet (200) for the calculated time interval, during one drum turn, reducing the magnetic attraction force and the associated friction force between race in the housing (500) and the electromagnet (200).

## Patentansprüche

1. Wäschebehandlungsgerät (10), umfassend eine Wanne (30), eine Trommel (50), die drehbar innerhalb der Wanne (30) montiert ist, mindestens eine um die Achse (51) der Trommel (50) gewickelte Sendespule (620), die dazu ausgelegt ist, drahtlose elektrische Leistung zu liefern; mindestens ein zentriert an der Trommel (50) auf ihrem Umfang montiertes ringförmiges Gehäuse (500), das einen darin definierten kranzförmigen Kanal aufweist; mindestens zwei Auswuchteinheiten (400), wobei jede Auswuchteinheit einen ihre Außenseite bildenden Körper (410) aufweist, der ihre Bewegung in dem Kanal ermöglicht, wobei die Auswuchteinheit (400) mindestens eine Empfangsspule (630) mit ihrer Wicklungsachse senkrecht zur Wicklungsachse der Sendespule (620), die dazu ausgelegt ist, drahtlose Leistung von der Sendespule (620) zu empfangen, und ein Aktuatormittel (200, 201) aufweist, das durch die Empfangsspule (630) mit Leistung versorgt wird; Unwuchtsensoren und eine Geräteverwaltungseinrichtung, die den gesamten Betrieb des Wäschebehandlungsgeräts (10) steuert, die dazu ausgelegt ist, die Positionierung der Auswuchteinheiten (400) zu verwalten und die Sendespule (620) basierend auf der Position der Auswuchteinheiten (400), der Unwucht der Trommel (50) und der Trommeldrehzahl anzutreiben, **dadurch gekennzeichnet, dass** das Aktuatormittel (200) ein Elektromagnet ist, der dazu ausgelegt ist, eine Reibungskraft zu erzeugen, die aus der magnetischen Anziehung zwischen seiner Magnetisierungsoberfläche (240) und einem ferromagnetischen Laufring (331) resultiert, der auf einer der Seiten (331) des Gehäuses (500) vorhanden ist.

2. Wäschebehandlungsgerät (10) nach Anspruch 1, **dadurch gekennzeichnet, dass** die Auswuchteinheit (400) ferner ein sich von ihrem Körper (410) erstreckendes Kontaktelement (431) umfasst, das dazu ausgelegt ist, mit geringer Reibung auf der Seite (331) des Gehäuses (500) außerhalb in Bezug auf die Achse der Trommel (50) zu gleiten oder zu rollen.

3. Wäschebehandlungsgerät (10) nach Anspruch 2, **dadurch gekennzeichnet, dass** das Kontaktelement ein Rad (431) mit seiner Drehachse parallel zur Achse der Trommel (50) ist, das dazu ausgelegt ist, auf der Seite (331) des Gehäuses (500) außerhalb in Bezug auf die Achse der Trommel zu rollen.

4. Wäschebehandlungsgerät (10) nach Anspruch 3, **dadurch gekennzeichnet, dass** sich der ferromagnetische Laufring (331) auf der Seite (331) des Gehäuses (500) außerhalb in Bezug auf die Achse (51) der Trommel (50) befindet und die radiale Position des Schwerpunkts der Auswuchteinheit (400), bezogen auf die Achse (51) der Trommel (50), zwischen der Drehachse (432) des Rades (431) und den radialen Positionen des Elektromagneten (200) enthalten ist, wobei der Winkelabstand der Achse (432) des Rades (431) in Bezug auf den Schwerpunkt der Auswuchteinheit (400) weniger als 10 % kleiner ist als der Winkelabstand der Achse (432) des Rades (431) in Bezug auf den Elektromagneten (200).

5. Wäschebehandlungsgerät (10) nach den Ansprüchen 3 bis 4, **dadurch gekennzeichnet, dass** die Achse (432) des Rades (431) und der Schwerpunkt der Auswuchteinheit (400) in Bezug auf die durch die Achse der Trommel (50) definierte radiale Richtung ausgerichtet sind.

6. Wäschebehandlungsgerät (10) nach den Ansprüchen 1 bis 6, **dadurch gekennzeichnet, dass** die Empfangsspulen (630) der Auswuchteinheiten so ausgelegt sind, dass sie unterschiedliche Resonanzfrequenzen aufweisen.

7. Wäschebehandlungsgerät (10) nach den Ansprüchen 1 bis 6, **dadurch gekennzeichnet, dass** ein Parkaktuatorelement (201) einen Stift (241) aufweist, der dazu ausgelegt ist, in eine Öffnung der Gehäuseseite (341) einzutreten, um eine Bewegung der Auswuchteinheit (400) in dem Gehäuse (500) zu blockieren, wenn sich die Trommel (50) mit niedriger Drehzahl dreht.

8. Wäschebehandlungsgerät (10) nach Anspruch 7, **dadurch gekennzeichnet, dass** das Parkaktuatorelement (201) so ausgelegt ist, dass die Zentrifugalkraft bewirkt, dass sein Stift (241) aus der Öffnung der Gehäuseseite (341) herausgezogen wird.

9. Wäschebehandlungsgerät (10) nach den Ansprüchen 7 und 8, **dadurch gekennzeichnet, dass** das Parkaktuatorelement (201) ein Elektromagnet ist, der dazu ausgelegt ist, seinen Stift (241) aus der Öffnung der Gehäuseseite herauszuziehen, wenn seine Spule (251) mit Leistung versorgt wird.

10. Verfahren zum Steuern eines Wäschebehandlungsgeräts (10) nach den Ansprüchen 1 bis 9, umfassend eine Wanne (30), eine Trommel (50), die drehbar innerhalb der Wanne (30) montiert ist, mindestens eine Sendespule (620), die dazu ausgelegt ist, drahtlose elektrische Leistung zu liefern; mindestens ein zentriert an der Trommel (50) auf ihrem Umfang montiertes ringförmiges Gehäuse (500), das einen darin definierten kranzförmigen Kanal aufweist; mindestens zwei Auswuchteinheiten (400), die beweglich in dem Kanal angeordnet sind, wobei die Auswuchteinheiten (400) jeweils mindestens eine Empfangsspule (630), die dazu ausgelegt ist, drahtlose Leistung von der Sendespule (620) zu empfangen, ein Rad (431), das dazu ausgelegt ist, auf einer Seite (331) zu rollen, die in dem Kanal des Gehäuses (500) ausgebildet ist, und ein Elektromagnetaktuatormittel (200) aufweisen, das dazu ausgelegt ist, mit einem Laufring in dem Gehäuse (500) mit ferromagnetischem Verhalten magnetisch zu interagieren; Unwuchtsensoren und eine Geräteverwaltungseinrichtung, die dazu ausgelegt ist, den gesamten Gerätebetrieb, die Positionierung der zwei Auswuchteinheiten (400) zu verwalten und die Sendespule (620) basierend auf den Positionen der zwei Auswuchteinheiten (400), der Unwucht der Trommel (50) und der Drehzahl der Trommel (50) anzutreiben, wobei das Verfahren Folgendes umfasst:
- Einstellen einer ersten Drehzahl s1 der Trommel (50), die höher als die Wäschesatellisierungsgeschwindigkeit ist, wobei die Auswuchteinheiten (400) in dem Gehäuse (500) durch die Reibung aufgrund der magnetischen Anziehungskraft zwischen den Elektromagneten (200) und dem Laufring in dem Gehäuse (500) mit ferromagnetischem Verhalten gebremst werden.
- wenn die Unwucht höher als ein vordefinierter Pegel ist, Auswerten der Positionen der Auswuchteinheiten (400) in Bezug auf die Unwucht der Trommel (50);
- Berechnen der gewünschten Positionsänderung der Auswuchteinheiten und, für die zu bewegende ausgewählte Auswuchteinheit, des Zeitintervalls, in dem während einer Umdrehung der Trommel (50) die Schwerkraft bewirkt, dass sie in die gewünschte Richtung bewegt wird;
- Ändern des in dem Elektromagneten (200) der ausgewählten Auswuchteinheit fließenden Stroms für das berechnete Zeitintervall während einer Trommelumdrehung, wodurch die magnetische Anziehungskraft und die zugehörige Reibungskraft zwischen dem Laufring in dem Gehäuse (500) und dem Elektromagneten (200) reduziert werden.

## Revendications

1. Appareil de traitement du linge (10) comprenant une cuve (30), un tambour (50) monté de manière rotative à l'intérieur de la cuve (30), au moins une bobine émettrice (620) enroulée autour de l'axe (51) du tambour (50) configurée pour fournir une alimentation électrique sans fil ; au moins un logement en forme de bague (500) monté centré sur le tambour (50) sur son périmètre, ayant un canal annulaire défini à l'intérieur de celui-ci ; au moins deux unités d'équilibrage (400), chaque unité d'équilibrage ayant un corps (410) formant son extérieur permettant son déplacement dans ledit canal, ladite unité d'équilibrage (400) a au moins, une bobine réceptrice (630) ayant son axe d'enroulement perpendiculaire audit axe d'enroulement de bobine émettrice (620) configurée pour recevoir une alimentation sans fil en provenance de ladite bobine émettrice (620) et des moyens actionneurs (200, 201) alimentés par ladite bobine réceptrice (630) ; des capteurs de balourd et un gestionnaire d'appareil commandant le fonctionnement complet du traitement de linge (10), configurés pour gérer le positionnement desdites unités d'équilibrage (400) et entraîner la bobine émettrice (620) sur la base de la position des unités d'équilibrage (400), du balourd du tambour (50) et de la vitesse de rotation de tambour, **caractérisé en ce que** le moyen actionneur (200) est un électroaimant configuré pour créer une force de frottement résultant de l'attraction magnétique entre sa surface magnétisante (240) et une bague ferromagnétique (331) présente sur l'un des côtés (331) du logement (500).

2. Appareil de traitement du linge (10) selon la revendication 1, **caractérisé en ce que** ladite unité d'équilibrage (400) comprend en outre un élément de contact (431) s'étendant à partir de son corps (410), configuré pour coulisser ou rouler avec un faible frottement, sur le côté du logement (500) (331), externe par rapport à l'axe du tambour (50).

3. Appareil de traitement du linge (10) selon la revendication 2, **caractérisé en ce que** l'élément de contact est une roue (431) ayant son axe de rotation parallèle à l'axe du tambour (50), configurée pour rouler sur le côté (331) du logement (500), externe par rapport à l'axe de tambour.

4. Appareil de traitement du linge (10) selon la revendication 3, **caractérisé en ce que** la bague ferromagnétique (331) est sur le côté (331) logement (500), externe par rapport à l'axe (51) du tambour (50), et la position radiale de centre de gravité de l'unité d'équilibrage (400), référencée par rapport à l'axe (51) du tambour (50) , est comprise entre l'axe de rotation (432) de la roue (431) et les positions radiales de l'électroaimant (200), dans lequel la distance angulaire de l'axe (432) de la roue (431) par rapport au centre de gravité de l'unité d'équilibrage (400) est inférieure à 10 % de moins que la distance angulaire de l'axe (432) de la roue (431) par rapport à l'électroaimant (200).

5. Appareil de traitement du linge (10) selon les revendications 3 à 4, **caractérisé en ce que** l'axe (432) de la roue (431) et le centre de gravité d'unité d'équilibrage (400) sont alignés par rapport à la direction radiale définie par l'axe du tambour (50).

6. Appareil de traitement de linge (10) selon les revendications 1 à 6, **caractérisé en ce que** les bobines réceptrices d'unités d'équilibrage (630) sont configurées pour avoir des fréquences de résonance différentes.

7. Appareil de traitement du linge (10) selon les revendications 1 à 6, **caractérisé en ce qu'**un élément actionneur de stationnement (201) a une broche (241) configurée pour entrer dans une ouverture côté (341) de logement afin de bloquer un déplacement de l'unité d'équilibrage (400) dans le logement (500) lorsque le tambour (50) tourne à un faible régime.

8. Appareil de traitement du linge (10) selon la revendication 7, **caractérisé en ce que** l'élément actionneur de stationnement (201) est configuré de telle sorte que la force centrifuge agisse pour rétracter sa broche (241) hors de l'ouverture côté (341) de logement.

9. Appareil de traitement du linge (10) selon les revendications 7 et 8, **caractérisé en ce que** l'élément d'actionnement de stationnement (201) est un électroaimant configuré pour rétracter sa broche (241) hors de l'ouverture de côté de logement lorsque sa bobine (251) est alimentée.

10. Procédé de commande d'un appareil de traitement du linge (10) selon les revendications 1 à 9 comprenant une cuve (30), un tambour (50) monté de manière rotative à l'intérieur de la cuve (30), au moins une bobine émettrice (620) configurée pour fournir de l'énergie électrique sans fil ; au moins un logement en forme de bague (500) monté centré sur le tambour (50) sur son périmètre, ayant un canal annulaire défini à l'intérieur de celui-ci ; au moins deux unités d'équilibrage (400) disposées de manière mobile dans ledit canal, lesdites unités d'équilibrage (400) ayant chacune au moins une bobine réceptrice (630) configurée pour recevoir de l'énergie sans fil en provenance de ladite bobine émettrice (620), une roue (431) configurée pour rouler sur un côté (331) formé dans ledit canal du logement (500) et un moyen actionneur d'électroaimant (200) configuré pour interagir magnétiquement avec une bague dans le logement (500) ayant un comportement ferromagnétique ; des capteurs de balourd et un gestionnaire d'appareil configuré pour gérer le balourd complet de l'appareil, le positionnement des deux unités d'équilibrage (400) et pour entraîner la bobine émettrice (620) sur la base des positions des deux unités d'équilibrage (400), du balourd du tambour (50) et de la vitesse de rotation du tambour (50), le procédé comprenant :
- le réglage d'une première vitesse s1 de rotation du tambour (50) à plus élevé que la vitesse de satellite du linge, les unités d'équilibrage (400) sont freinées dans le logement (500) par le frottement dû à la force d'attraction magnétique entre les électroaimants (200) et la bague dans le logement (500) ayant un comportement ferromagnétique.
- si le balourd est supérieur à un niveau prédéfini, l'évaluation des positions des unités d'équilibrage (400) par rapport au balourd du tambour (50) ;
- le calcul du changement de position d'unités d'équilibrage souhaité et pour l'unité d'équilibrage sélectionnée à déplacer, l'intervalle de temps lorsque, pendant une rotation de rotation du tambour (50), la force de gravité agit pour la déplacer dans la direction souhaitée ;
- le changement du courant circulant dans l'électroaimant d'unité d'équilibrage sélectionné (200) pour l'intervalle de temps calculé, pendant un tour de tambour, réduire la force d'attraction magnétique et la force de frottement associée entre la course dans le logement (500) et l'électroaimant (200).
